# FASCICULE DE BREVET EUROPEEN

(11) **EP 1 299 746 B1**
(45) Date de publication et mention de la délivrance du brevet: **08.12.2004**
(21) Numéro de dépôt: 01953061.7
(22) Date de dépôt: 29.06.2001
(51) Int. Cl.: G01S 5/14

(54) **PROCEDE DE DETERMINATION EN SECURITE DE LA LOCALISATION D'UN OBJET, DE PREFERENCE UN VEHICULE, SE DEPLACANT SELON UNE TRAJECTOIRE CONNUE**
VERFAHREN ZUR SICHEREN ORTUNG EINES OBJEKTS, VORZUGSWEISE EINES FAHRZEUGES, DAS SICH AUF EINER BEKANNTEN FAHRBAHN BEWEGT
METHOD FOR SECURE DETERMINATION OF AN OBJECT LOCATION, PREFERABLY A VEHICLE MOVING ALONG A KNOWN COURSE

(30) Priorité: 30.06.2000 US 215607 P; 30.06.2000 EP 00870153
(43) Date de publication de la demande: 09.04.2003
(73) Titulaire: Alstom Belgium S.A., 6001 Charleroi (BE)
(72) Inventeur: FRANCKART, Jean-Pierre, B-6060 Montignies-sur-Sambre (BE)
(74) Mandataire: Van Malderen, Joelle
(86) Numéro de dépôt international: PCT/BE2001/000114
(87) Numéro de publication internationale: WO 2002/003094

(56) Documents cités:
- EP-A- 0 791 518
- WO-A-89/05255
- US-A- 5 867 122
- US-A- 5 977 909

## Description

### Objet de l'invention

La présente invention se rapporte à un procédé de détermination en sécurité de la localisation et/ou du positionnement d'un objet se déplaçant selon une trajectoire connue par le dispositif de localisation.

Par "trajectoire", on entend un sous-ensemble de l'espace délimité par une surface tubulaire de section quelconque et variable, dans lequel le véhicule est strictement contraint de se déplacer. Dans le cas où la section de ce tube peut être négligée, cela donne deux équations liant longitude, latitude et altitude du mobile.

La présente invention se rapporte plus précisément à un procédé de détermination de la localisation d'un train se déplaçant sur une voie ferroviaire dont on connaît le tracé exact.

Le même principe pourra être appliqué au cas où une seule équation est connue (déplacement du mobile sur une surface connue).

La présente invention se rapporte à un procédé de détermination de la localisation et/ou du positionnement d'un véhicule en sécurité au sens ferroviaire du terme, c'est-à-dire qu'il s'agit de pouvoir déterminer la localisation ou plus précisément les zones de non-présence dudit véhicule sur un tronçon, ceci de manière quasi instantanée, pour un véhicule se déplaçant sur une trajectoire connue, et ceci avec une probabilité donnée.

Cette localisation est basée sur l'utilisation de satellites de navigation où de balises terrestres de navigation équivalentes dénommés dans la suite de façon générique "satellites".

### Etat de la technique

En signalisation ferroviaire, on ne permet l'entrée d'un train dans un tronçon de voie déterminé que si l'on est certain que le train précédent a quitté celui-ci, c'est-à-dire que le tronçon de voie concerné est libre. Dans ce but, il est nécessaire de connaître avec une marge d'erreur prédéterminée, bien entendu extrêmement faible, et ceci en sécurité au sens ferroviaire du terme; par exemple avec un taux d'erreur maximal de l'ordre de 10⁻⁹ et de préférence de l'ordre de 10⁻¹², les zones où l'on peut être assuré de la non-présence d'un train, et ceci à chaque itération du calcul.

Il est connu de déterminer la localisation précise d'un objet, et a fortiori d'un train, à l'aide du calcul de la position par rapport à trois satellites, les récepteurs aptes à recevoir les informations desdits satellites étant capables de calculer les coordonnées dudit objet en déplacement avec une précision plus ou moins importante.

Cependant, il est nécessaire d'adjoindre une mesure précise du temps universel, ce qui au niveau d'un récepteur par exemple disposé dans le train, peut se révéler complexe et parfois onéreux à mettre en oeuvre. En outre, il convient de noter qu'il est nécessaire que les différents satellites appartiennent à la même constellation et utilisent le même temps de référence.

De ce fait, on utilise généralement un quatrième satellite qui permet la localisation précise de l'objet concerné par la résolution d'un système de quatre équations à quatre inconnues, en obtenant les trois coordonnées du point concerné et la valeur du temps.

En réalité, sur base de la connaissance des coordonnées de ces satellites, on effectue une estimation par calcul de la distance qui sépare lesdits satellites de l'objet récepteur dont on veut estimer la localisation.

De nombreuses stratégies pour augmenter en qualité et/ou la quantité d'informations utilisées, tant dans le domaine civil que militaire, ont permis d'améliorer la précision de ces mesures.

On peut dans ce but citer entre autres :
- l'augmentation du nombre de satellites intervenant dans la mesure (y compris au sol),
- la corrélation entre mesures successives pour réduire le poids de certaines causes d'erreurs,
- la diffusion par radio (satellite ou non) d'informations de correction locale (DGPS, WAAS par exemple),
- l'augmentation de la précision de la mesure temporelle par synchronisation sur les porteuses des satellites,
- l'utilisation d'informations de maintenance et de contrôle diffusées par le ou les réseaux de surveillance au sol des constellations de satellites.

Ces différentes informations sont compilées pour affiner autant que possible la valeur la plus probable de la position de l'objet recherché et en augmenter la précision.

En outre, des techniques de codage et d'auto-corrélation ont également été proposées pour pouvoir se protéger contre les interférences électromagnétiques ou les actes de malveillance susceptibles de se produire lors de la prise des mesures.

Enfin, pour certaines applications, on peut ajouter au système de localisation par satellites des capteurs complémentaires qui peuvent encore améliorer la quantité ou la qualité des informations disponibles tels que des capteurs de pression atmosphérique en aéronautique, des capteurs de rotation d'essieux du train couplés à un radar doppler, des stations inertielles partielles ou complètes, etc.
Un système de localisation d'un train à l'aide d'au moins un satellite et d'une cartographie est par exemple décrit dans le brevet US-A-5 977 909.

### Buts de l'invention

La présente invention se propose donc de décrire un procédé et un dispositif qui permettent la localisation et/ou le positionnement en sécurité d'un objet, et donc a fortiori un véhicule tel qu'un train, se déplaçant sur une trajectoire connue.

Par localisation sécuritaire, on doit entendre la localisation, plus exactement la non-présence d'un train en-dehors d'une zone redéfinie à chaque calcul avec un taux d'erreur inférieur à 10⁻⁹ et de préférence pouvant atteindre 10⁻¹².

### Principaux éléments caractéristiques de l'invention

La présente invention se rapporte à un procédé de détermination de la localisation et/ou du positionnement d'un objet selon la revendication 1, en particulier d'un véhicule tel qu'un train, se déplaçant selon une trajectoire connue, et ceci en sécurité au sens ferroviaire du terme, caractérisé en ce que l'on détermine ladite localisation et/ou ledit positionnement dudit objet par un calcul valable à un temps donné et basé d'une part sur des mesures élémentaires impliquant au moins un satellite chacune et d'autre part sur une cartographie sécuritaire de ladite trajectoire connue.

De préférence, ladite cartographie sécuritaire permet d'obtenir deux relations à trois inconnues représentant les coordonnées dudit objet dont on cherche à connaître la localisation et/ou le positionnement, tandis qu'au moins une autre relation entre les trois mêmes inconnues est obtenue à l'aide des informations transmises par au moins un satellite dont on connaît la position.

Plus précisément, la présente invention se rapporte à un procédé où chaque mesure élémentaire consiste à déterminer un domaine individuel le long de ladite trajectoire entre deux points kilométriques, ledit domaine dépendant de l'écart-type des erreurs de mesure temporelles de ladite mesure élémentaire, de la vitesse de la lumière, d'un coefficient lié aux coordonnées dudit satellite concerné et de la trajectoire de la voie et d'un facteur pondérateur définissant la géométrie de la distribution de l'erreur pour toute prise de mesure, de telle sorte que la probabilité de non-présence du train dans ledit domaine individuel est prédéfinie.

De manière avantageuse, chaque prise de mesure est redondée, ce qui permet de déterminer plusieurs domaines individuels par plusieurs prises de mesures élémentaires effectuées simultanément au même temps donné, basées sur des satellites différents ou sur des paires de satellites.

Selon une première forme d'exécution, une mesure élémentaire sera effectuée à l'aide d'une paire de satellites utilisant le même temps de référence. De préférence, la paire de satellites appartiendra à la même constellation.

Selon une autre forme d'exécution préférée, une mesure élémentaire sera effectuée à l'aide d'au moins un satellite appartenant à une constellation et d'un récepteur lié à l'objet de déplaçant selon la trajectoire connue, ledit récepteur possédant une horloge synchronisée sur le temps de référence de ladite constellation à laquelle appartient le satellite.

Ceci signifie que pour effectuer une prise simultanée de plusieurs mesures élémentaires, il suffit d'augmenter le nombre de satellites.

De préférence, on détermine l'existence d'un domaine commun défini comme l'intersection des, et de préférence de tous les différents domaines individuels. De manière particulièrement avantageuse, on rejette les domaines individuels qui ne présentent pas de point commun avec le domaine commun.

Ainsi, s'il existe un domaine commun non nul, on détermine le domaine de présence possible de l'objet mobile comme l'union des domaines individuels non rejetés.

On en déduit que la probabilité de non-présence en-dehors du domaine d'union est définie comme la multiplication des probabilités de non-présence dans les domaines individuels connus.

Selon une forme d'exécution préférée, les domaines individuels définissant le domaine d'union dépendent d'un paramètre définissant la géométrie de la distribution de l'erreur plus grand ou égal au paramètre choisi pour la détermination des domaines individuels définissant le domaine commun.

### Description détaillée de l'invention

Le procédé de détermination de la localisation et/ou du positionnement d'un objet, et plus particulièrement d'un train, se déplaçant selon une trajectoire connue, peut en fait être interprété selon deux modes de fonctionnement différents:
- le mode linéique, lorsque le train parcourt une voie sans embranchement dans le voisinage de sa position, et
- le mode topologique, lorsque le train va s'engager dans une zone d'aiguillage ou lorsque l'on ne peut pas encore être sûr qu'il l'a quittée.

La présente invention se rapporte plus précisément à la localisation d'un train se déplaçant en mode linéique.

En cas d'un déplacement en mode topologique, c'est-à-dire dans une zone d'aiguillage par exemple, il est décrit ci-dessous des exemples de mise en oeuvre qui permettent de revenir rapidement du mode topologique au mode linéique et donc d'appliquer le procédé selon la présente invention.

Il est bien entendu que toute généralisation à un véhicule se déplaçant selon une trajectoire connue pourra être faite, par exemple à un bateau se déplaçant sur un réseau de canaux, une voiture se déplaçant sur une autoroute dont on connaît le tracé exact, etc.

Il convient de noter que dans le domaine de la signalisation ferroviaire, la trajectoire de l'objet et plus précisément du train est connue avec précision et en sécurité. Il convient donc simplement de vérifier qu'un train ne s'approche pas d'un point dangereux (tronçon de voie déterminé) et de signaler sa présence au train qui le suit et jusqu'où ce dernier peut s'engager sans risque de le rencontrer.

Le temps de rafraîchissement dans un système ferroviaire doit être au maximum de une à quelques secondes.

### Le mode linéique

Dans ce mode, on localise le train en terme de domaine défini par deux points kilométriques, c'est-à-dire comme un intervalle de confiance défini par deux coordonnées curvilignes où il est possible, pour une voie identifiée dont on connaît le tracé exact, (ou tout au moins le tracé sinon exact, probable au sens sécuritaire du terme) de définir avec un taux d'erreur aussi petit que nécessaire la non-présence d'un train.

La cartographie de la voie donne deux équations connues en sécurité entre trois coordonnées (altitude, latitude et longitude). La cartographie est déposée dans une banque de données sécuritaire et transférée à bord du train en début de service en garantissant l'intégrité du contenu par les moyens classiques de sécurité ferroviaire : codage, redondance. Sa mise à jour éventuelle est de préférence gérée par un protocole adéquat.

La troisième équation sera donnée par une mesure élémentaire impliquant au moins un satellite et de préférence une paire de satellites. Il s'agit :
- soit d'une mesure du temps de transmission entre un satellite et le récepteur disposé sur l'objet mobile (le train), ce qui définit la distance entre ledit satellite et le récepteur, ceci dans le cas où ledit récepteur possède une horloge synchronisée sur le temps de référence de la constellation à laquelle appartient le satellite,
- soit d'une mesure de la différence des temps de transmission de chacun des satellites d'une paire de satellites et leur récepteur disposé dans l'objet mobile (le train) dans le cas où ledit récepteur n'est pas muni d'une horloge synchronisée sur le temps de référence de la constellation à laquelle appartiennent les satellites.

Il convient de noter que dans le cas d'une prise de mesure élémentaire à l'aide de deux satellites appartenant de préférence à la même constellation ou tout au moins à des constellations utilisant le même temps de référence, il ne sera pas nécessaire que le récepteur disposé dans le train possède une horloge synchronisée avec ce temps de référence.

Par contre, dans le cas où une prise de mesure élémentaire est effectuée avec un seul satellite, il est indispensable que le récepteur disposé dans le train soit muni d'une horloge synchronisée avec le temps de référence de la constellation à laquelle appartient ce satellite.

Ceci augmente le coût de la mise en oeuvre du procédé selon la présente invention mais réduira le nombre de satellites nécessaires à chaque mesure élémentaire.

Lors d'une mesure élémentaire (i = 1), on tentera donc de déterminer, par un système d'équations (trois ou quatre) à plusieurs inconnues (trois ou quatre), le positionnement dudit véhicule qui se déplace, ou plus précisément le domaine Dᵢ défini sur la trajectoire par les deux points kilométriques Kⁱₘᵢₙ et Kⁱₘₐₓ comptés à partir d'une référence quelconque, mais unique pour chaque ligne et séparés d'une distance 2 ηₐ c σᵢ αᵢ où
- η est un coefficient sans dimension définissant la géométrie de la distribution de l'erreur,
- c est la vitesse de la lumière,
- σᵢ est l'écart type connu des erreurs de mesure temporelle, et
- αᵢ est un coefficient sans dimension lié aux coordonnées des satellites et à la trajectoire de la voie.

Si on désigne par σ₁ l'écart type connu des erreurs de mesure temporelles lors de cette première mesure élémentaire effectuée par exemple à l'aide d'une première paire de satellites, on peut considérer : ± ηₐ σ₁, comme étant la limite de l'erreur de mesure avec une probabilité Pₐ (10⁻² à 10⁻⁴ par exemple), ce qui définit ηₐ comme un coefficient sans dimension qui permet de faire l'hypothèse que la distribution est gaussienne lors d'une prise de mesure élémentaire. Habituellement ηₐ est compris entre 1 et 4 et de préférence entre 2 et 3. En effet, si ηₐ est trop grand, ceci diminue les critères de sévérité sur les mesures, c'est-à-dire augmente la probabilité de taux d'erreur. Par contre, si ηₐ est choisi trop petit, on augmente le risque de non-convergence des mesures et donc de rejet de ladite mesure élémentaire.

ηₐ et le nombre de mesures élémentaires (et donc le nombre de satellites utilisés) doivent être choisis pour atteindre les conditions de probabilité prédéfinies.

Il convient de noter que σ₁ inclut les erreurs de distribution aléatoire liées par exemple :
- à la vitesse de propagation de l'onde dans l'ionosphère et la troposphère,
- aux erreurs de calibrage relatives des horloges internes des satellites,
- aux erreurs entre leur position réelle et leur position émise,
- aux erreurs de synchronisation sur les messages reçus,
- etc.

La mesure élémentaire est répétée k fois (avec k satellites ou k paires de satellites différentes). Les k mesures élémentaires peuvent être effectuées en utilisant des constellations différentes. Ceci détermine des domaines D₂a ... Dₖa, de même nature que D₁a.

Si tous ces domaines Dᵢ^{a} contiennent un sous-ensemble de points kilométriques qui leur est commun, on définit le domaine commun D₀^{a} comme l'intersection des domaines Dᵢ^{a}. Dans ce cas, les paramètres du sous-système de satellites utilisés sont dans leur mode de fonctionnement normal, en tout cas pour la mesure demandée à ce moment. On peut l'imposer comme condition nécessaire dans l'algorithme de calcul.

De plus, si la condition d'existence D₀^{a} est remplie, on peut négliger la probabilité d'avoir une anomalie non connue dans le sous-ensemble de satellites utilisé, anomalie qui entraînerait la nullité d'une mesure ou la sous-estimation de la probabilité d'erreur dans le domaine calculé. Dans le cas contraire, on peut faire appel à des mesures complémentaires en utilisant un ou deux satellites supplémentaires.

Il convient de noter que le raisonnement repris ci-dessus est effectué sur base de paires de satellites. Le même raisonnement pourrait bien entendu être effectué à l'aide de satellites individuels agissant en interaction avec le récepteur, à condition que le récepteur possède lui-même une horloge synchronisée sur le temps de référence de la constellation à laquelle appartiennent le ou les satellites. Néanmoins, le fait de prévoir une horloge synchronisée sur le temps de référence de la constellation, telle qu'une horloge au césium, reste relativement onéreux et il est fort probable que cette solution ne sera pas directement envisagée.

Si enfin, les paires de satellites utilisées appartiennent à des constellations différentes ou si une surveillance adéquate permet de s'assurer qu'à l'intérieur d'une même constellation, il n'y a pas d'erreur de mode commun, alors la probabilité que la localisation réelle soit à l'extérieur d'un domaine union : Dᵤ^{b} (défini comme l'union des domaines individuels Dᵢ^{b}: 2 η_{b} c σ₁ α₁) vaudra (P_{b}) ^{k} au maximum, ce qui donne accès aux probabilités d'erreur de 10⁻⁹ à 10⁻¹² qui sont nécessaires.

Le coefficient η_{b} est défini avec η_{b} ≥ ηₐ tel que la probabilité P_{b} d'avoir une localisation extérieure au domaine 2 η_{b} c σᵢ αᵢ puisse être choisie aussi réduite que nécessaire (10⁻³ à 10⁻⁶ par exemple).

A l'intérieur d'une même constellation, la non-présence d'erreur de mode commun peut être déterminée par exemple par la recherche de position de stations fixes connues sur base des mêmes paires de satellites. Une anomalie peut être communiquée aux trains soit par le poste chef, soit par liaison radio locale. Le temps nécessaire à cette opération doit alors être ajouté au temps de calcul proprement dit.

### Le mode topologique

Ainsi que déjà décrit précédemment, le déplacement d'un train sous un mode topologique devrait être ramené le plus rapidement possible à un déplacement en mode linéique afin de pouvoir mettre en oeuvre le procédé selon la présente invention.

A titre d'exemple, si un train suit un autre train et que la voie entre eux ne comporte pas d'aiguillage, le positionnement du train suiveur se fait exclusivement en mode linéique; sa limite de mouvement autorisée sera calculée sur base de la connaissance possible de l'arrière du train qui le précède, et ceci par dialogue direct ou non avec ce train.

De même, lorsqu'un train roule en direction d'un aiguillage, le système lui donne la certitude qu'il n'y a pas d'autre objet entre cet aiguillage et lui-même en l'autorisant par exemple à prendre possession d'un jeton (bâton pilote) associé à l'aiguillage.

Lorsqu'il est en possession de ce jeton, il peut orienter l'aiguillage selon l'itinéraire attribué à ce train par le centre de contrôle. Ayant la confirmation de l'immobilisation de l'aiguillage dans la position requise, la topologie de la voie pour ce train dans le voisinage de l'aiguillage est connue : on est donc ramené au cas précédent, la localisation pouvant de nouveau fonctionner en mode linéique, à ceci près qu'il faudra éventuellement changer le point kilométrique de référence après passage de l'aiguillage pour le fixer dans la nouvelle voie empruntée.

Le jeton est restitué à l'aiguillage lorsqu'il est acquis que la fin du train a quitté celui-ci ; il est alors disponible pour le train suivant.

Le fait de restituer le jeton induira souvent un changement de cartographie (nouvelle trajectoire connue).

En conclusion, on est revenu dans ce cas de figure à un mode de déplacement linéique.

### Brève description des figures

La figure 1 représente l'équipement nécessaire à bord du train à la mise en oeuvre du procédé selon une première forme d'exécution.

La figure 2 représente l'équipement nécessaire sur la voie à la mise en oeuvre du procédé selon une première forme d'exécution.

La figure 3 représente l'équipement nécessaire dans le poste central à la mise en oeuvre du procédé selon une première forme d'exécution.

### Description d'une forme d'exécution préférée de l'invention

Parmi différentes formes de mise en oeuvre du procédé selon la présente invention, celle décrite ci-après est l'une des plus représentatives. Elle est décrite en s'appuyant sur les figures mentionnées ci-dessus, qui décrivent respectivement des éléments spécifiques ou adaptés qui sont disposés à bord du train, dans la voie et au poste de contrôle.

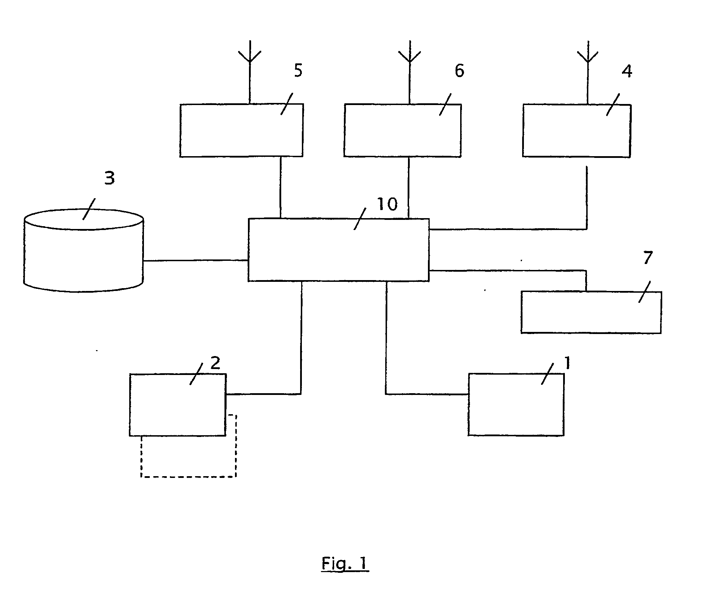

La figure 1 représente l'équipement nécessaire à bord du train à la mise en oeuvre du procédé selon une première forme d'exécution, dans une version non redondée pour amélioration de la disponibilité.

En effet, selon la technologie du récepteur satellite utilisé et de son décodeur, cet équipement peut être dédoublé de sorte que des défauts ne puissent affecter de façon apparemment cohérente les informations transmises concernant des satellites différents.

L'élément Train Interface Unit 1 (TIU) est implémenté dans le cas où on ajoute une fonctionnalité protection de trains (ATP) au système.

L'élément Man Machine Interface 2 (MMI)est normalement présent pour le dialogue avec le conducteur. Il serait omis dans le cas d'un système de protection strict, non associé à la signalisation en cabine. L'équipement de deux cabines d'un même train peut se faire sur le même ordinateur sécuritaire 10.

La cartographie 3 de la voie est une zone mémoire gérée par l'ordinateur sécuritaire 10 durant le fonctionnement normal, avec en plus en début de service une procédure de contrôle du contenu de celle-ci via la radio 4 et le poste central. Si une mise à jour est nécessaire, une procédure adéquate est mise en place. Elle peut impliquer une validation par le conducteur via l'élément Man Machine Interface 2.

La radio 4 est une interface standard vers une radio sol-train de type analogique ou numérique (GSM-R par exemple).

L'ordinateur sécuritaire 10 (en principe sécuritaire au sens ferroviaire du terme) fait appel aux technologies classiques : codage (NISAL ou FIDARE par exemple) ou redondance (2 de 2) éventuellement associés à une redondance pour amélioration de la disponibilité (1 de 2, 2 de 3, 2 de 4).

L'ordinateur sécuritaire 10 est en contact avec le récepteur / décodeur du premier satellite 5 et le récepteur / décodeur du second satellite 6. Habituellement, ces récepteurs / décodeurs sont des récepteurs / décodeurs multicanaux et peuvent être en liaison simultanément avec plusieurs satellites.

Selon une autre forme d'exécution, il suffit de prévoir un récepteur / décodeur disposé dans le train avec une horloge synchronisée sur le temps de référence de la constellation de satellites. Dans ce cas de figure, pour chaque prise de mesure, un seul satellite est suffisant.

Des versions à disponibilité améliorée sont réalisées en ajoutant selon les besoins :
- des récepteurs supplémentaires,
- une interface radio supplémentaire,
- une architecture redondée pour l'ordinateur central (dont la mémoire est le support de la cartographie),
- une architecture partiellement ou complètement redondée pour l'élément Man Machine interface (MMI) et l'élément Train Interface Unit (TIU).

Des versions à précision améliorée sont réalisées en ajoutant éventuellement des capteurs complémentaires 7 (accélération, gyroscopes, radars doppler, etc.).

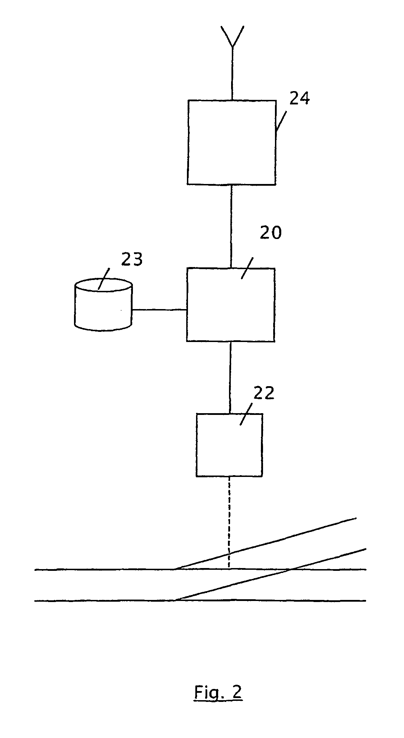

La figure 2 représente une version de base qui peut être redondée afin de permettre d'améliorer la disponibilité des équipements principaux du contrôleur d'objet nécessaires dans la voie.

Le contrôleur d'objet 20 commande, s'il y a lieu, l'organe 22 concerné dans la voie (objet) et reçoit de celui-ci les contrôles et variables d'état pertinentes. Il gère le jeton 23 dont il est le gardien lorsqu'il n'est pas utilisé par un train ou par un équipement spécialisé portable ou fixe. L'interface radio 24 est semblable à celle de l'équipement de bord.

Comme dans le cas de l'équipement de bord, diverses réalisations avec redondance peuvent être faites.

On peut également envisager un équipement de voie qui est portable et destiné aux travailleurs en voie et à certaines interactions urgentes sur le trafic. Il permet notamment aux travailleurs de se localiser sans risque d'erreur sur le réseau, d'induire en sécurité les limitations de trafic adéquates (et de les lever ensuite) et éventuellement de recevoir des avertissements de trains en approche.

Dans une de ses réalisations possibles, l'architecture de cet équipement est très similaire à celle de l'équipement de bord.

Les fonctionnalités de l'élément Man Machine Interface (MMI) sont adaptées : elles ne contiennent pas celles qui sont basées sur des informations dynamiques de l'équipement (distance but, vitesse, etc.), mais permettent par contre certaines opérations sur les jetons du système.

L'élément Train Interface Unit (TIU) devient une interface d'alerte (par exemple sonore) de train en approche.

Afin d'augmenter la précision dans le voisinage d'endroits critiques (entrées de gare par exemple) ou aux fins de surveillance de la constellation utilisée, un équipement complémentaire de la localisation en voie fixe peut être installé aux endroits adéquats. A nouveau, cet équipement est très proche de celui décrit à la figure 1, mais dans ce cas, n'inclut ni un élément Train Interface Unit (TIU) ni un élément Man Machine Interface (MMI). En outre, il n'est en principe pas doté de fonctionnalités de gestion des jetons, mais est prévu seulement pour communiquer sur demande des trains ou du poste central les écarts instantanés de localisation (localisation linéique) pour chaque paire des satellites utilisés par le système qu'il peut capter. Ces écarts sont utilisés pour réduire l'intervalle de confiance des mesures et valider les satellites utilisés.

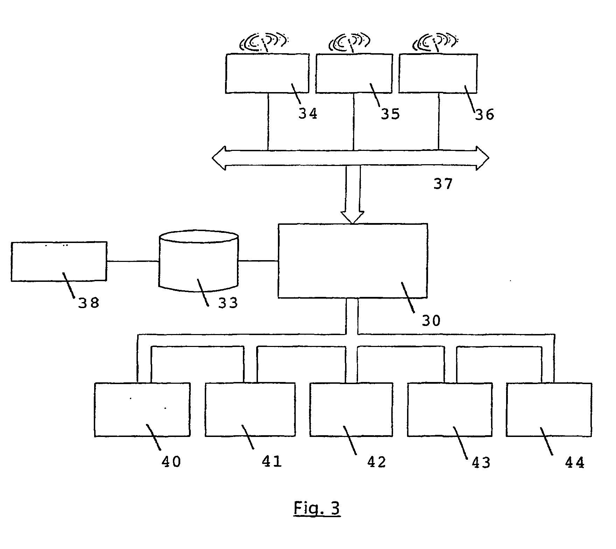

La figure 3 décrit le poste central selon un exemple de réalisation préféré, qui est caractérisé par le fait qu'un minimum de fonctions sont traitées en sécurité. Hormis le contrôle de la cartographie, les fonctions de base de l'équipement sont réalisées sans faire appel à la sécurité au poste central.

En pratique, des équipements sécuritaires 40, 41, 42, 43, 44 peuvent être adjoints pour réaliser des fonctions complémentaires depuis l'ordinateur central 30 : sécurité des travailleurs en voie, protections diverses, fonction déplacée pour compatibilité avec des engins non complètement équipés, back-up en cas de défaillance, etc.

La gestion de la cartographie 33 est assurée hors temps réel mais en sécurité par un équipement dédicacé 38.

L'ordonnance du système (priorités aux trains, instructions vers ceux-ci d'établir le contact avec les différents contrôleurs d'objet pour y prendre les jetons qui les concernent, etc.) est réalisé par l'ordinateur central et l'opérateur via la console 42 de suivi des opérations et en conformité avec les tables horaires préétablies via la console 41 de gestion des horaires.

Le suivi de maintenance et les interventions particulières (urgences, back-up de trains partiellement défaillants, etc.) peuvent être réalisés via des consoles 40, 41, 42, 43, 44 spécialisées (comme représenté à la figure 3) ou via la même console que le suivi des opérations par exemple. En fait, le nombre total de consoles 40, 41, 42, 43, 44 est à adapter aux besoins de l'implantation.

Les interfaces radio 34, 35, 36 mettent en communication l'ordinateur central 30 et les satellites via un bus radio 37, généralement redondé.

## Revendications

1. Procédé de détermination de la localisation et/ou du positionnement d'un objet, constitué par un véhicule ferroviaire, et ceci en sécurité au sens ferroviaire du terme, selon lequel l'on détermine ladite localisation et/ou ledit positionnement dudit objet par un calcul valable à un temps donné basé d'une part sur des mesures élémentaires impliquant au moins un satellite chacune et d'autre part sur une cartographie sécuritaire de ladite trajectoire connue, **caractérisé en ce que** lesdites mesures élémentaires (i) consistent à déterminer un domaine individuel (Dᵢ) par mesure le long de ladite trajectoire entre deux points kilométriques (Kⁱmin et Kⁱmax), chaque domaine dépendant de l'écart-type (σᵢ) des erreurs de mesure temporelles de ladite mesure élémentaire (i), de la vitesse (c) de la lumière, d'un coefficient (αᵢ) lié aux coordonnées dudit satellite concerné et de la trajectoire de la voie, et d'un facteur pondérateur (η) définissant la géométrie de la distribution des erreurs pour toute prise de mesure, de telle sorte que la probabilité (Pᵢ) de non-présence du train dans ledit domaine individuel (Dᵢ) est prédéfinie.

2. Procédé selon la revendication 1, **caractérisé en ce que** ladite cartographie sécuritaire permet d'obtenir deux relations à trois inconnues représentant les coordonnées dudit objet dont on cherche à connaître la localisation et/ou le positionnement tandis qu'au moins une autre relation entre les trois mêmes inconnues est obtenue à l'aide des informations transmises par au moins un satellite dont on connaît la position.

3. Procédé selon l'une quelconque des revendications précédentes, **caractérisé en ce que** la prise de mesure élémentaire est redondée.

4. Procédé selon la revendication 3, **caractérisé en ce que** l'on détermine plusieurs domaines individuels (Dᵢ) par plusieurs prises de mesure élémentaire (i) effectuées simultanément au même temps donné, basées sur des satellites différents ou sur des paires de satellites différents.

5. Procédé selon la revendication 4, **caractérisé en ce que** pour effectuer la prise simultanée de plusieurs mesures élémentaires, on augmente le nombre de satellites.

6. Procédé selon la revendication 4 ou 5, **caractérisé en ce que** l'on détermine l'existence d'un domaine commun (D₀) défini comme l'intersection des, et de préférence de tous les différents domaines individuels (Dᵢ).

7. Procédé selon la revendication 6, **caractérisé en ce que** l'on rejette les domaines individuels (Dᵢ) qui ne présentent pas de point commun avec le domaine commun (Dₒ).

8. Procédé selon la revendication 6 ou 7, **caractérisé en ce que** l'on détermine un domaine (Dᵤ) qui est l'union des domaines individuels (Dᵢ) non rejetés comme le domaine de présence possible.

9. Procédé selon la revendication 8, **caractérisé en ce que** la probabilité de non-présence dans le domaine d'union (Dᵤ) est la multiplication des probabilités de non-présence dans les domaines individuels connus (Dᵢ).

10. Procédé selon la revendication 8 ou 9, **caractérisé en ce que** les domaines individuels (Dᵢ^{b}) définissant le domaine d'union (Dᵤ) dépendent d'un paramètre (η_{b}) définissant la géométrie de la distribution de l'erreur plus grand ou égal au paramètre (ηₐ) choisi pour la détermination des domaines individuels (Dᵢ^{a}) définissant le domaine commun (D₀).

11. Procédé selon l'une quelconque des revendications précédentes, **caractérisé en ce que** l'on effectue une mesure élémentaire à l'aide d'au moins une paire de satellites utilisant le même temps de référence.

12. Procédé selon la revendication 11, **caractérisé en ce que** la paire de satellites utilisés pour une mesure élémentaire appartient à la même constellation.

13. Procédé selon l'une quelconque des revendications 1 à 9, **caractérisé en ce que** l'on effectue une mesure élémentaire à l'aide d'au moins un satellite appartenant à une constellation et d'un récepteur lié à l'objet se déplaçant selon la trajectoire connue, ledit récepteur possédant une horloge synchronisée sur le temps de référence de la constellation à laquelle appartient le satellite.

## Patentansprüche

1. Verfahren zur im eisenbahntechnischen Sinn sicheren Bestimmung der Lage und/oder der Position eines aus einem Schienenfahrzeug bestehenden Gegenstands, bei dem die besagte Lage und/oder die besagte Position des Gegenstands durch eine zu einer gegebenen Zeit gültige Berechnung bestimmt wird, wobei die Berechnung einerseits auf Grundmessungen, die jeweils mindestens einen Satelliten miteinbeziehen, und andererseits auf einem Kartensystem mit sicherheitsrelevanten Daten der bekannten Strecke beruht, **dadurch gekennzeichnet, dass** die besagten Grundmessungen (i) darin bestehen, entlang der besagten Strecke zwischen zwei Kilometerpunkten (Kⁱmin und Kⁱmax) einen Einzelbereich (Dᵢ) durch Messung zu bestimmen, wobei jeder Bereich abhängig ist von der Standardabweichung (σᵢ) der zeitlichen Messfehler der besagten Grundmessung (I), der Lichtgeschwindigkeit (c), einem mit den Koordinaten des besagten betreffenden Satelliten und dem Verlauf der Bahnstrecke in Zusammenhang stehenden Koeffizienten (αᵢ), und einem Gewichtungsfaktor (η), der die Geometrie der Fehlerverteilung für jede erfolgte Messung definiert, so dass die Wahrscheinlichkeit (Pᵢ) der Nichtanwesenheit des Zuges in dem besagten Einzelbereich (Dᵢ) vordefiniert wird.

2. Verfahren nach Anspruch 1, **dadurch gekennzeichnet, dass** aufgrund des besagten Kartensystems mit sicherheitsrelevanten Daten zwei Relationen mit drei Unbekannten, die die Koordinate des besagten Gegenstands, dessen Lage und/oder Position man wissen möchte, darstellen, erstellt werden können, wobei mindestens eine weitere Relation zwischen den drei gleichen Unbekannten aufgrund der durch mindestens einen Satelliten, dessen Position bekannt ist, übertragenen Informationen erstellt wird.

3. Verfahren nach irgendeinem der vorhergehenden Ansprüche, **dadurch gekennzeichnet, dass** die Grundmessung durch eine Redundanzmessung wiederholt wird.

4. Verfahren nach Anspruch 3, **dadurch gekennzeichnet, dass** durch mehrere zur gleichen gegebenen Zeit aufgrund von unterschiedlichen Satelliten oder von unterschiedlichen Satellitenpaaren gleichzeitig durchgeführte Grundmessungen (i) mehrere Einzelbereiche (Dᵢ) bestimmt werden.

5. Verfahren nach Anspruch 4, **dadurch gekennzeichnet, dass** zur gleichzeitigen Durchführung von mehreren Grundmessungen die Anzahl an Satelliten erhöht wird.

6. Verfahren nach Anspruch 4 oder 5, **dadurch gekennzeichnet, dass** das Vorhandensein eines gemeinsamen Bereichs (D₀) bestimmt wird, der als Schnittpunkt der, vorzugsweise aller, unterschiedlichen Einzelbereiche (Dᵢ) definiert wird.

7. Verfahren nach Anspruch 6, **dadurch gekennzeichnet, dass** die Einzelbereiche (Dᵢ), die mit dem gemeinsamen Bereich (D₀) keine Gemeinsamkeit aufweisen, verworfen werden.

8. Verfahren nach Anspruch 6 oder 7, **dadurch gekennzeichnet, dass** ein Bereich (Dᵤ) als Bereich der möglichen Anwesenheit bestimmt wird, der die nicht verworfenen Einzelbereiche (Dᵢ) in sich vereint.

9. Verfahren nach Anspruch 8, **dadurch gekennzeichnet, dass** die Wahrscheinlichkeit der Nichtanwesenheit im Vereinigungsbereich (Dᵤ) die Multiplikation der Wahrscheinlichkeiten der Nichtanwesenheit in den bekannten Einzelbereichen (Dᵢ) ist.

10. Verfahren nach Anspruch 8 oder 9, **dadurch gekennzeichnet, dass** die den Vereinigungsbereich (Dᵤ) definierenden Einzelbereiche (Dᵢ^{b}) von einem Parameter (ηb) abhängig sind, der die Geometrie der Fehlerverteilung definiert und größer/gleich dem Parameter (ηa) ist, der zur Bestimmung der den gemeinsamen Bereich (D₀) definierenden Einzelbereiche (Dᵢ^{a}) ausgewählt wurde.

11. Verfahren nach irgendeinem der vorhergehenden Ansprüche, **dadurch gekennzeichnet, dass** eine Grundmessung anhand von mindestens einem Satellitenpaar durchgeführt wird, wobei die Satelliten die gleiche Referenzzeit verwenden.

12. Verfahren nach Anspruch 11, **dadurch gekennzeichnet, dass** das für die Grundmessung verwendete Satellitenpaar derselben Konstellation angehört.

13. Verfahren nach irgendeinem der Ansprüche 1 bis 9, **dadurch gekennzeichnet, dass** anhand von mindestens einem einer Konstellation angehörenden Satelliten und eines mit dem sich entlang der bekannten Strecke fortbewegenden Gegenstand verbundenen Empfängers eine Grundmessung durchgeführt wird, wobei der besagte Empfänger einen Taktgeber besitzt, welcher auf die Referenzzeit der Konstellation, welcher der Satellit angehört, synchronisiert ist.

## Claims

1. Method for determining the location and/or the positioning of an object consisting of a railway vehicle, and this securely in terms of railway transport, according to which said location and/or said positioning of said object is determined by a valid calculation at a given time based, on the one hand, on elementary measurements involving at least a satellite each and, on the other hand, on a secure mapping of said known course, **characterised in that** said elementary measurements (i) consist in determining an individual domain (Dᵢ) per measurement along said course between two mileage points (Mⁱₘᵢₙ and Mⁱₘₐₓ), each domain depending on the standard deviation (σᵢ) of the timing measurement errors of said elementary measurement (i), the speed (c) of light, a coefficient (αᵢ) linked with the coordinates of said satellite in question and the course of the track, and a weighting factor (η) defining the geometry of the errors distribution for any measurement recording, so that the probability (Pᵢ) of non-presence of the train in said individual domain (Dᵢ) is predefined.

2. The method according to claim 1, **characterised in that** said secure mapping makes it possible to obtain two relationships with three unknowns representing the coordinates of said object whose location and/or positioning is intended to be ascertained, while at least another relationship between the same three unknowns is obtained with the aid of the information transmitted by at least one satellite whose position is known.

3. The method according to any one of the preceding claims, **characterised in that** the elementary measurement recording is redundant.

4. The method according to claim 3, **characterised in that** a plurality of individual domains (Dᵢ) are determined by a plurality of elementary measurement recordings (i) carried out simultaneously at the same given time, which are based on different satellites or on pairs of different satellites.

5. The method according to claim 4, **characterised in that** the number of satellites is increased in order to record a plurality of elementary measurements simultaneously.

6. The method according to claim 4 or 5, **characterised in that** the existence of a common domain (D₀) is determined, which is defined as the intersection of the, and preferably of all the, different individual domains (Dᵢ).

7. The method according to claim 6, **characterised in that** the individual domains (Dᵢ) which have no point in common with the common domain (D₀) are rejected.

8. The method according to claim 6 or 7, **characterised in that** a domain (Dᵤ) which is the union of the non-rejected individual domains (Dᵢ) is determined as the domain of possible presence.

9. The method according to claim 8, **characterised in that** the probability of non-presence in the union domain (Dᵤ) is the multiplication of the probabilities of non-presence in the known individual domains (Dᵢ).

10. The method according to claim 8 or 9, **characterised in that** the individual domains (Dᵢ^{b}) defining the union domain (Dᵤ) depend on a parameter (η_{b}) defining the geometry of the error distribution which is greater than or equal to the parameter (ηₐ) selected for determining the individual domains (Dᵢ^{a}) defining the common domain (D₀).

11. The method according to any one of the preceding claims, **characterised in that** an elementary measurement is carried out with the aid of at least one pair of satellites using the same reference time.

12. The method according to claim 11, **characterised in that** the pair of satellites which are used for an elementary measurement belong to the same constellation.

13. The method according to any one of the claims 1 to 9, **characterised in that** an elementary measurement is carried out with the aid of at least one satellite belonging to a constellation and a receiver linked with the object moving along the known course, said receiver having a clock synchronised with the reference time of the constellation to which the satellite belongs.
